# EUROPEAN PATENT SPECIFICATION

(11) **EP 4 283 250 B1**
(45) Date of publication and mention of the grant of the patent: **20.05.2026**
(21) Application number: 21920990.5
(22) Date of filing: 21.01.2021
(51) Int. Cl.: G01B 11/00, G01H 9/00

(54) **EQUIPMENT LOCATION SPECIFYING SYSTEM, COVER, AND EQUIPMENT LOCATION SPECIFYING METHOD**
SYSTEM ZUR BESTIMMUNG DES STANDORTES EINER ANLAGE, ABDECKUNG UND VERFAHREN ZUR BESTIMMUNG DES STANDORTES EINER ANLAGE
SYSTÈME DE SPÉCIFICATION D'EMPLACEMENT D'ÉQUIPEMENT, ENVELOPPE ET PROCÉDÉ DE SPÉCIFICATION D'EMPLACEMENT D'ÉQUIPEMENT

(43) Date of publication of application: 29.11.2023
(60) Divisional application: 24217005.8
(73) Proprietor: NTT, Inc., Tokyo 100-8116 (JP)
(72) Inventor: IIDA, Daisuke, Musashino-shi, Tokyo 180-8585 (JP); KOSHIKIYA, Yusuke, Musashino-shi, Tokyo 180-8585 (JP); HONDA, Nazuki, Musashino-shi, Tokyo 180-8585 (JP)
(74) Representative: v. Bezold & Partner Patentanwälte - PartG mbB
(86) International application number: PCT/JP2021/002003
(87) International publication number: WO 2022/157877

(56) References cited:
- WO-A1-2020/044648
- WO-A1-2020/044648
- WO-A1-2020/166330
- JP-A- 2017 219 369
- JP-A- 2020 052 030
- JP-A- 2020 052 030
- JP-A- H10 177 055
- ELECTRIDUCT.COM: "Hinged Locking Clamps", 19 January 2013 (2013-01-19), XP093301837, Retrieved from the Internet <URL:https://web.archive.org/web/20130119213633/https://www.electriduct.com/Hinged-Locking-Clamps.html> [retrieved on 20250804]

## Description

### [Technical Field]

The present disclosure relates to a technique for specifying a route of an overhead cable including optical fibers by expressing the route with the length of optical fibers from a communication-intensive building.

### [Background Art]

A technique for specifying a position of a facility using an optical fiber vibration sensor is known (for example, see PTL 1 and PTL 2). For example, as illustrated in Fig. 1, when using an optical fiber vibration sensing device 20 from a communication-intensive building 10 of a communication optical fiber 25 and applying a hit 15 to a cover of a manhole 30 while measuring the vibration of the communication optical fiber 25, a hit vibration can be measured and the position on the optical fiber 25, in the longitudinal direction, from the communication-intensive building 10 (a distance from the communication-intensive building 10 to the position where vibration is applied) can be specified. By confirming the measurement result, it is possible to confirm that a communication optical fiber 35 exists in underground 6 at the position and to collate the manhole position with a fiber route map, without opening the manhole 30.

### [Citation List]

### [Patent Literature]

[PTL 1] Japanese Patent Application Laid-open No. 2020-127094
[PTL 2] Japanese Patent Application Laid-open No. 2020-052030

### [Summary of Invention]

### [Technical Problem]

In order to solve the above problem, an object of the present invention is to provide a facility position specification system, a cover, and a facility position specification method capable of specifying a route of an overhead cable without directly disturbing the overhead cable itself.

### [Solution to Problem]

On the other hand, the presence of an overhead cable can be confirmed visually, but it is not clear that an overhead cable which has been visually confirmed is a search object. In addition, as in PTL 1, directly applying a disturbance (hit or the like) to a cable may affect communication.

An object of the present invention is to provide a facility position specification system, a cover, and a facility position specification method capable of specifying a route of an overhead cable without directly giving disturbance to the overhead cable itself.

Specifically, a facility position specification system according to the present invention is a facility position specification system for specifying a position of an overhead cable, the system including
an optical fiber along the overhead cable, a cylindrical cover covering the overhead cable at an arbitrary position on the overhead cable in a longitudinal direction, wherein the cover (40) has lamellas (42) on an inner wall thereof, the lamellas (42) being in contact with the overhead cable (26) and transmitting the vibration to the overhead cable,
an optical measuring instrument connected to an end of the optical fiber and configured to acquire temporal change in scattered light from the optical fiber when vibration is applied to the overhead cable from the cover as temporal change in a scattered optical intensity distribution of the optical fiber in a longitudinal direction, and
a signal processing unit configured to specify a vibration position on the optical fiber to which the vibration is applied based on the scattered optical intensity distribution, and specify an actual position of the overhead cable to which the vibration is applied by associating the vibration position on the optical fiber with a position of the overhead cable on a map.

In addition, the facility position specifying method according to the present invention is a facility position specifying method for specifying a position of an overhead cable, the method including
covering the overhead cable with a cylindrical cover at an arbitrary position on the overhead cable in a longitudinal direction, wherein the cover (40) has lamellas (42) on an inner wall thereof, the lamellas (42) being in contact with the overhead cable (26) and transmitting the vibration to the overhead cable,
connecting an optical measuring instrument to an end portion of an optical fiber included in the overhead cable, applying vibration to the overhead cable from the cover, acquiring a temporal change of scattered light from the optical fiber when the vibration is applied as temporal change in a scattered optical intensity distribution of the optical fiber in a longitudinal direction,
specifying a vibration position on the optical fiber to which the vibration is applied based on the scattered optical intensity distribution, and
associating the vibration position on the optical fiber with a position of the overhead cable on a map and specifying an actual position of the overhead cable to which the vibration is applied.

In the facility position specification system (method), a cover is attached to an arbitrary position on the overhead cable, and vibration is applied to the overhead cable through the cover. Since, in the facility position specification system (method), the overhead cable is not hit directly, optical fiber vibration sensing can be performed in a state where the likelihood of affecting communication is small.

In addition, alternatively, the facility position specifying method according to the present invention is a facility position specifying method for specifying a position of a pillar supporting an overhead cable, the method including connecting an optical measuring instrument to an end portion of an optical fiber included in the overhead cable,
applying vibration to any of the pillars,
acquiring a temporal change of scattered light from the optical fiber when the vibration is applied as temporal change in a scattered optical intensity distribution of the optical fiber in a longitudinal direction,
specifying a vibration position on the optical fiber to which the vibration is applied based on the scattered optical intensity distribution; and
associating the vibration position on the optical fiber with a position of the overhead cable on a map and specifying the actual position of the pillar to which the vibration was applied.

Accordingly, the present invention can provide a facility position specification system, and a facility position specification method capable of specifying a route of an overhead cable without directly giving disturbance to the overhead cable itself.

The cover of the facility position specification system according to the present invention may include a vibration mechanism for applying the vibration. That is, the cover includes a vibration mechanism for generating vibration and a cylinder for covering an overhead cable including an optical cable at an arbitrary position and transmitting the vibration to the overhead cable. It is not necessary for a worker to directly hit, and remote control is possible.

The cover of the facility position specification system according to the present invention may have a fold on an inner wall thereof, which is in contact with the overhead cable and transmits the vibration to the overhead cable. That is, the cover includes a cylinder for covering an overhead cable including an optical cable at an arbitrary position and a fold disposed on an inner wall of the cylinder, coming into contact with the overhead cable, and transmitting vibration of the cylinder to the overhead cable. The vibration from the cover can be efficiently transmitted to the overhead cable.

The above inventions can be combined wherever possible.

### [Advantageous Effects of Invention]

The present invention can provide a facility position specification system, a cover, and a facility position specification method capable of specifying a route of an overhead cable without directly giving disturbance to the overhead cable itself.

### [Brief Description of Drawings]

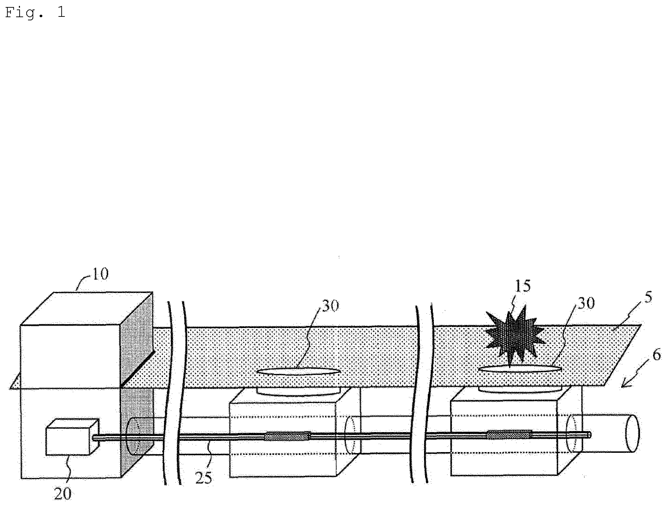

[Fig. 1] Fig. 1 is a diagram illustrating a facility position specification principle using an optical fiber vibration sensor.
[Fig. 2] Fig. 2 is a diagram illustrating a facility position specification system according to the present invention.
[Fig. 3] Fig. 3 is a diagram illustrating a cover included in the facility position specification system according to the present invention.
[Fig. 4] Fig. 4 is a diagram illustrating a facility position specifying method according to the present invention.
[Fig. 5] Fig. 5 is a diagram illustrating the facility position specifying method according to the present invention.
[Fig. 6] Fig. 6 is a diagram illustrating the facility position specifying method according to the present invention.
[Fig. 7] Fig. 7 is a table for illustrating an operation method of the facility position specification system according to the present invention.
[Fig. 8] Fig. 8 is a diagram illustrating a scattered optical intensity distribution to be measured by an optical measuring instrument of the facility position specification system according to the present invention.
[Fig. 9] Fig. 9 is a diagram illustrating matching performed by the facility position specification system according to the present invention.
[Fig. 10] Fig. 10 is a diagram illustrating a facility position specifying method according to the present invention.
[Fig. 11] Fig. 11 is a diagram illustrating the facility position specification system according to the present invention.

### [Description of Embodiments]

Embodiments of the present invention will be described with reference to accompanying drawings. The embodiments described below are examples of the present invention, and the present invention is not limited to the following embodiments. In the present specification and the drawings, the components having the same reference numerals indicate the same components.

### (Embodiment 1)

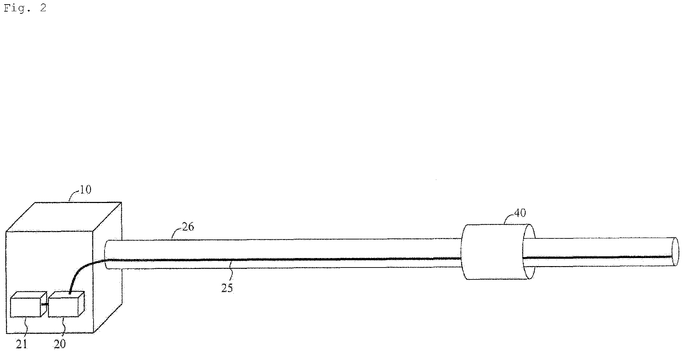

Fig. 2 is a diagram illustrating a facility position specification system according to the present invention. The facility position specification system is a facility position specification system for specifying a position of an overhead cable 26, the system including
an optical fiber 25 along the overhead cable 26,
a cylindrical cover 40 covering the overhead cable 26 at an arbitrary position on the overhead cable 26 in the longitudinal direction,
an optical measuring instrument 20 connected to an end of the optical fiber 25 and configured to acquire temporal change in scattered light from the optical fiber 25 when vibration is applied to the overhead cable 26 from the cover 40 as temporal change in a scattered optical intensity distribution of the optical fiber 25 in a longitudinal direction, and
a signal processing unit 21 configured to specify a vibration position on the optical fiber 25 to which the vibration is applied based on the scattered optical intensity distribution, and specify an actual position of the overhead cable 26 to which the vibration is applied by associating the vibration position on the optical fiber 25 with a position of the overhead cable 26 on a map.

The overhead cable 26 is a cable stretched in the air by a pillar or the like. The overhead cable 26 is a metal wire or an optical fiber cable for power supply. The optical fiber 25 used in this system is laid along the overhead cable 26. In a case where the overhead cable 26 is an optical fiber cable, the optical fiber in the optical fiber cable can be used as the optical fiber 25.

The cover 40 is disposed so as to cover the overhead cable 26. The cover 40 may be attached when laying the overhead cable 26, or the cover 40 may be attached to the overhead cable 26 by a worker every inspection. The cover 40 has a function of transmitting vibration such as a given hit to the overhead cable 26. For this reason, the cover 40 is preferably made of a material having a high modulus of elasticity (a high Young's modulus) and a low density, for example, a metal, in order to efficiently transmit vibration to the cable.

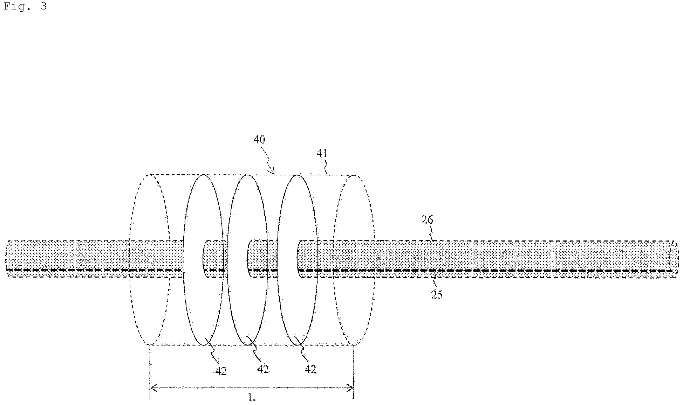

Fig. 3 is a diagram illustrating a structure of the cover 40. The cover 40 includes
a cylinder 41 for covering the overhead cable 26 at an arbitrary position, and
a fold 42 that is disposed on an inner wall of the cylinder 41, comes into contact with the overhead cable 26, and transmits vibration of the cylinder 41 to the overhead cable 26.

The cover 40 covers the overhead cable 26 with the cylinder 41. The cylinder 41 and the overhead cable 26 are not in direct contact with each other. The cover 40 has a fold 42, and a space is generated between the cylinder 41 and the overhead cable 26 by the fold 42 coming into contact with the overhead cable 26. The vibration from the cylinder 41 is transmitted to the overhead cable 26 through the folds 42. Thus, the vibration from the cylinder 41 can be efficiently transmitted to the overhead cable 26. In order to transmit vibration efficiently, the number of folds 42 and the length L of the cover 40 may be adjusted.

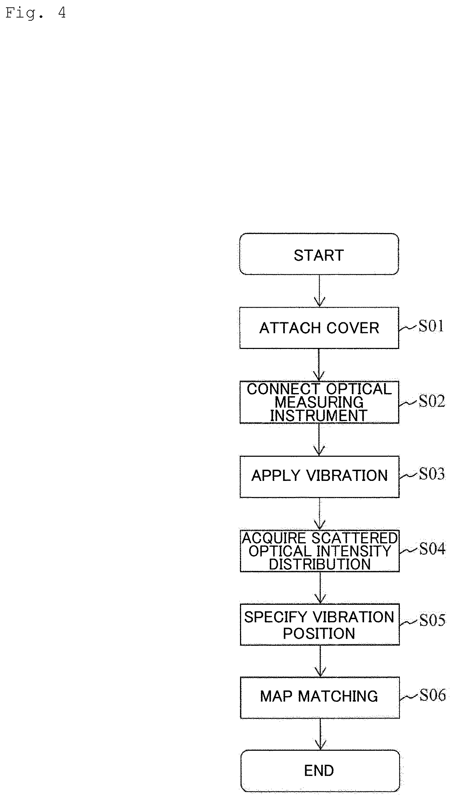

Fig. 4 is a flowchart illustrating the facility position specifying method. The present facility position specifying method includes
covering the overhead cable 26 with the cylindrical cover 40 at an arbitrary position on the overhead cable 26 in a longitudinal direction (step S01),
connecting an optical measuring instrument 20 to an end portion of the optical fiber 25 included in the overhead cable 26 (step S02),
applying vibration to the overhead cable 26 from the cover 40 (step S03),
acquiring a temporal change of scattered light from the optical fiber 25 when the vibration is applied as temporal change in a scattered optical intensity distribution of the optical fiber 25 in a longitudinal direction (step S04), specifying a vibration position on the optical fiber 25 to which the vibration is applied based on the scattered optical intensity distribution (step S05), and
associating the vibration position on the optical fiber 25 with a position of the overhead cable 26 on a map 50 and specifying an actual position of the overhead cable 26 to which the vibration is applied (step S06).

In step S01, the cover 40 is attached to the overhead cable 26 whose position is desired to be ascertained. The number of covers 40 is arbitrary. The cover 40 may be attached when laying the overhead cable 26, or the cover 40 may be attached to the overhead cable 26 by a worker every inspection.

One end of the overhead cable 26 is drawn into a communication-intensive building 10. In step S02, the optical fiber 25 is taken out from the overhead cable 26 drawn into the communication-intensive building 10, and is connected to the optical measuring instrument 20 (the end of the optical fiber 25 connected to the optical measuring instrument 20 is defined as "one end"). The optical measuring instrument 20 is, for example, an optical time domain reflectometer (OTDR).

In step S03, test light is input from the optical measuring instrument 20 to one end of the optical fiber 25, and the vibration is applied to the cover 40 during an optical test in which back scattered light output from the one end of the optical fiber 25 is measured by the optical measuring instrument 20. Here, the vibration applying method will be described.

### (Method 1)

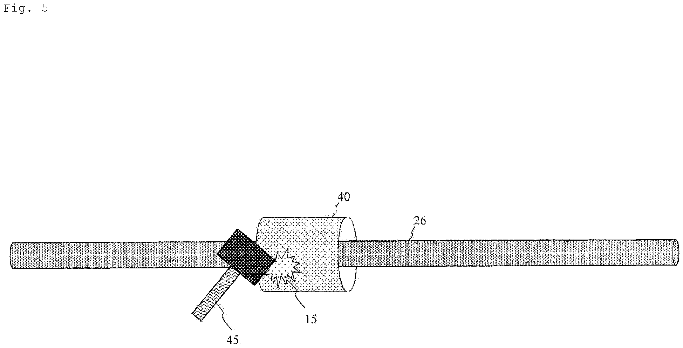

As illustrated in Fig. 5, an operator applies a hit 15 to the cover by a hammer or the like. For example, the operator may hit the cover by a long bar type hammer reaching from the ground. Further, the operator may move to the vicinity of the cover 40 by a bucket truck and hit the cover by a hammer.

### (Method 2)

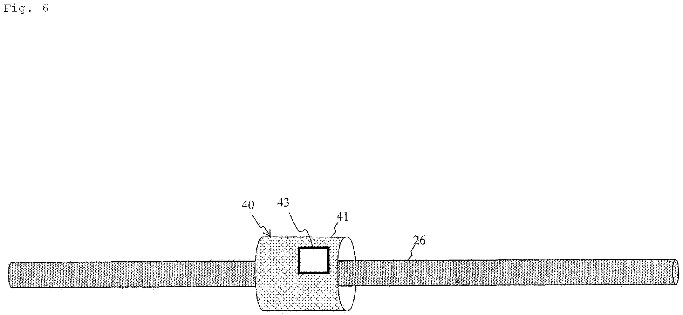

As illustrated in Fig. 6, the cover 40 includes a vibration mechanism 43 for generating vibration in the cylinder 41. The vibration mechanism 43 is disposed in the cylinder 41, for example, and is composed of a piezoelectric moving by radio waves and a battery such as a solar cell for supplying electric power to the piezoelectric. In a case where the cover 40 is provided with the vibration mechanism 43, a worker can apply vibration remotely without riding on a bucket truck or the like.

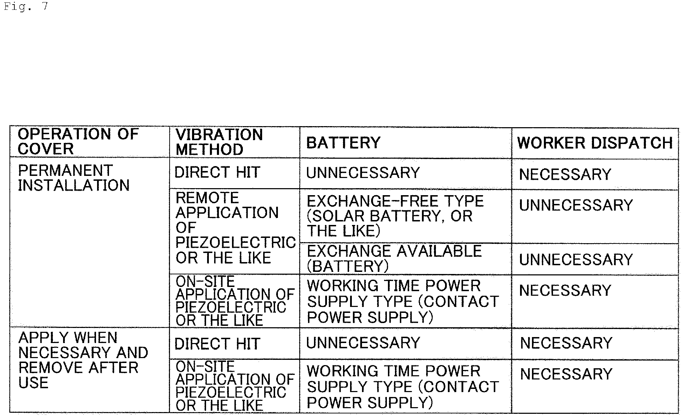

Fig. 7 is a table in which the work styles in the step S03 are summarized. As an operation method, there are cases where the cover 40 is always attached to the overhead cable 26 and where the cover 40 is always attached to the overhead cable 26 at the time of inspection. In either case, if the vibration applying method is used for hitting the cover 40 with a hammer or the like, the cover 40 does not require a vibration mechanism, but it is necessary to dispatch the worker to the work site.

On the other hand, in a case where the cover 40 is provided with the vibration mechanism 43, remote control is possible, and dispatch of a worker to the work site is not required. However, in a case where it is necessary to supply power to the vibration mechanism 43 during work, it is necessary to dispatch a worker.

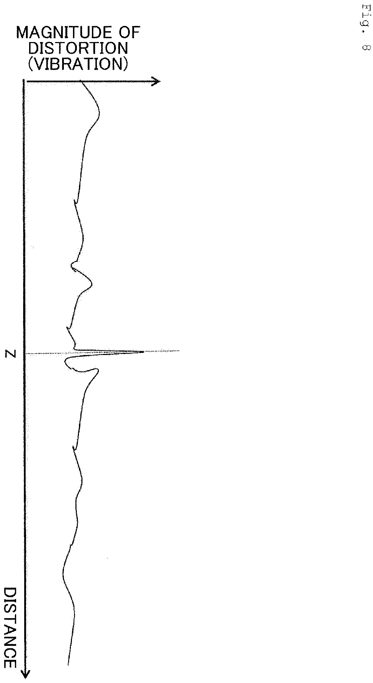

In steps S04 and S05, the optical measuring instrument 20 acquires an optical intensity distribution of back scattered light output from one end of an optical fiber 25. Fig. 8 shows an example of an optical intensity distribution obtained by the optical measuring instrument 20. The horizontal axis represents the distance from one end of the optical fiber 25. The vertical axis represents the light intensity of the back scattered light. It can be seen that there is a waveform peak at the position of the distance z and vibration was applied at this position.

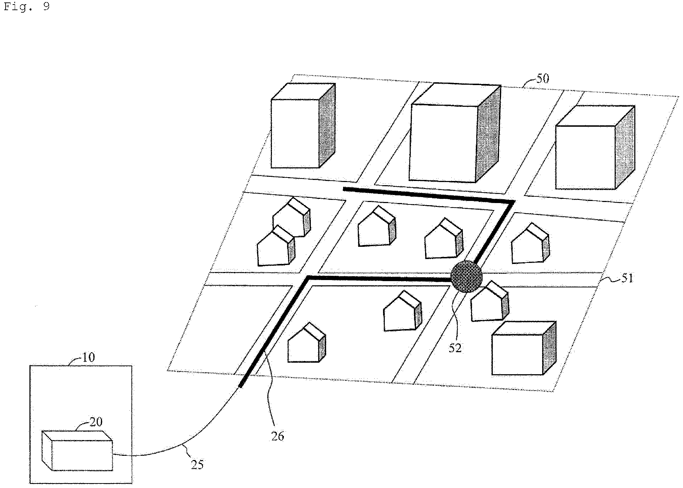

In step S06, a signal processing unit 21 matches a map 50 showing the layout of the overhead cable 26 with the optical intensity distribution of Fig. 8. Fig. 9 is a diagram illustrating matching work. On which route the overhead cable is laid when the overhead cable 26 is laid is recorded in the map 50.

As illustrated in Fig. 9, by collating the longitudinal distance of the optical fiber 25 with the length of the laid cable 26, the signal processing unit 21 can determine which place the peak position (hit position 52) of the optical intensity distribution illustrated in Fig. 8 corresponds to on the map 50.

### (Embodiment 2)

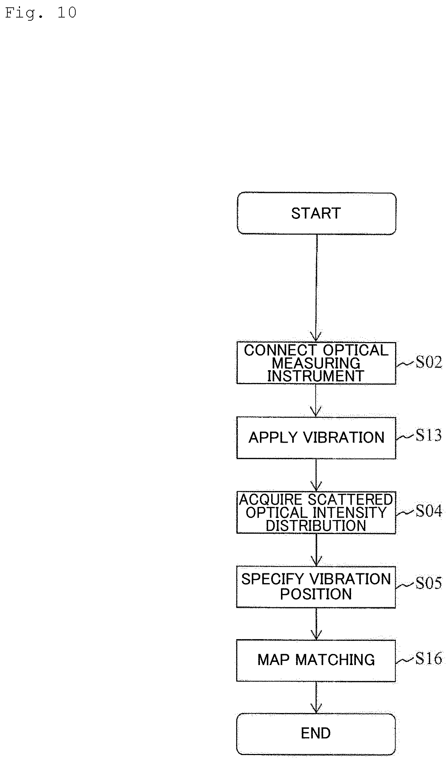

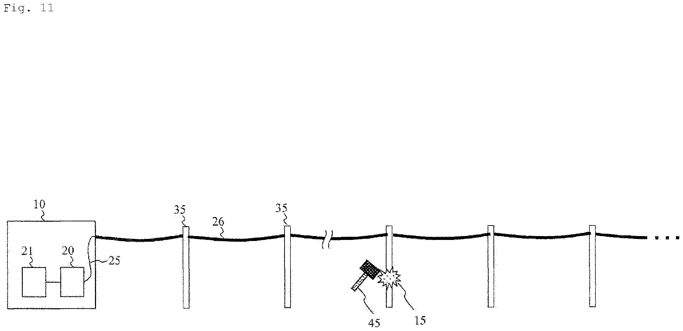

Fig. 10 is a flowchart for illustrating a facility position specifying method according to the present embodiment. Fig. 11 is a diagram for illustrating a facility position specification system to be inspected by the present facility position specifying method. The present facility position specifying method is a method for specifying a facility position without attaching the cover 40 in comparison with the facility position specifying method of Embodiment 1. The present facility position specification method includes connecting the optical measuring instrument 20 to an end portion of the optical fiber 25 included in the overhead cable 26 (step S02),
applying vibration to any of pillars 35 supporting the overhead cable 26 (step S13),
acquiring a temporal change of scattered light from the optical fiber 25 when the vibration is applied as temporal change in a scattered optical intensity distribution of the optical fiber 25 in a longitudinal direction (step S04), specifying a vibration position on the optical fiber 25 to which the vibration is applied based on the scattered optical intensity distribution (step S05), and
associating the vibration position on the optical fiber 25 with a position of the overhead cable 26 on a map 50, and specifying an actual position of the pillar 35 to which the vibration is applied (step S16).

In the facility position specifying method according to the present embodiment, the pillar 35 supporting the overhead cable 26 is hit instead of hitting the cover. When the pillar 35 is hit by a hammer 45 or the like, the vibration is transmitted to the optical fiber 25 of the overhead cable 26, and the scattered optical intensity distribution as illustrated in Fig. 8 can be acquired by the optical measuring instrument 20. Therefore, as illustrated with reference to Fig. 9, by collating the scattered optical intensity distribution with the map 50 in which the laying of the overhead cable 26 is described, it is possible to specify the actual position of the pillar 35 (the position on the map).

The present facility position specifying method does not require the work of attaching the cover to the overhead cable 26 in comparison with the facility position specifying method described in Embodiment 1, and can simply ascertain the standard of the position of the overhead cable 26 and the position of the electric pillar.

### [Advantageous Effects of Invention]

Since the vibration is applied to the cover or the pillar attached to the overhead cable and vibration is applied to the overhead cable without directly applying hit to the overhead cable, the scattered optical intensity distribution can be acquired without damaging the overhead cable.

The position and existence of the overhead cable and the electric pillar can be determined at the site where the worker is dispatched, and further, the overhead cable and the electric pillar can be matched with a map.

If it is a method of attaching the cover, the position and existence of the overhead cable can be determined even in a place where no electric pillar exists, and the overhead cable can be matched with the map.

When the vibrator is applied to the cover, the vibration can be applied to the overhead cable remotely.

### [Reference Signs List]

5: Ground
6: Underground
10: Communication-intensive building
15: Hit
20: Optical measuring instrument
21: Signal processing unit
25: Optical fiber
26: Overhead cable
30: Manhole
35: Pillar
40: Cover
41: Cylinder
42: Fold
43: Vibration mechanism
50: Map
51: Road
52: Hit position

## Claims

1. A facility position specification system for specifying a position of an overhead cable (26), the system comprising:
an optical fiber (25) along the overhead cable (26);
a cylindrical cover (40) covering the overhead cable (26) at an arbitrary position on the overhead cable (26) in a longitudinal direction, wherein the cylindrical cover (40) has lamellas (42) on an inner wall thereof, the lamellas (42) being in contact with the overhead cable (26) and transmitting the vibration to the overhead cable;
an optical measuring instrument (20) connected to an end of the optical fiber (25) and configured to acquire temporal change in scattered light from the optical fiber (25) when vibration is applied to the overhead cable (26) from the cylindrical cover (40) as temporal change in a scattered optical intensity distribution of the optical fiber (25) in a longitudinal direction; and
a signal processing unit (21) configured to specify a vibration position on the optical fiber (25) to which the vibration is applied based on the scattered optical intensity distribution, and specify an actual position of the overhead cable (26) to which the vibration is applied by associating the vibration position on the optical fiber (25) with a position of the overhead cable (26) on a map (50).

2. The facility position specification system according to claim 1, wherein the cylindrical cover (40) includes a vibration mechanism
(43) for applying the vibration.

3. A facility position specifying method for specifying a position of an overhead cable (26), the method comprising:
covering the overhead cable (26) with a cylindrical cover (40) at an arbitrary position on the overhead cable (26) in a longitudinal direction, wherein the cylindrical cover (40) has lamellas (42)
on an inner wall thereof, the lamellas (42) being in contact with the overhead cable (26) and transmitting the vibration to the overhead cable;
connecting an optical measuring instrument (20) to an end portion of an optical fiber (25) included in the overhead cable (26);
applying vibration to the overhead cable (26) from the cylindrical cover (40);
acquiring a temporal change of scattered light from the optical fiber (25) when the vibration is applied as temporal change in a scattered optical intensity distribution of the optical fiber (25) in a longitudinal direction;
specifying a vibration position on the optical fiber (25) to which the vibration is applied based on the scattered optical intensity distribution; and
associating the vibration position on the optical fiber (25) with a position of the overhead cable (26) on a map (50) and specifying an actual position of the overhead cable (26) to which the vibration is applied.

## Patentansprüche

1. Ein System zur Spezifizierung einer Einrichtungsposition zum Spezifizieren einer Position eines oberirdischen Kabels (26), das System umfasst:
eine optische Faser (25) entlang des oberirdischen Kabels (26);
eine zylindrische Abdeckung (40), die das oberirdische Kabel (26) an einer beliebigen Position auf dem oberirdischen Kabel (26) in einer Längsrichtung abdeckt, wobei die zylindrische Abdeckung (40) Lamellen (42) an einer Innenwand davon hat, die Lamellen (42) sind in Kontakt mit dem oberirdischen Kabel (26) und übertragen die Schwingung auf das oberirdische Kabel;
ein optisches Messgerät (20), das mit einem Ende der optischen Faser (25) verbunden ist und dazu konfiguriert ist, eine zeitliche Änderung von gestreutem Licht aus der optischen Faser (25) als zeitliche Änderung einer gestreuten optischen Intensitätsverteilung der optischen Faser (25) in einer Längsrichtung zu erfassen, wenn Schwingung von der zylindrischen Abdeckung (40) auf das oberirdische Kabel (26) aufgebracht wird; und
eine Signalverarbeitungseinheit (21), die dazu konfiguriert ist, eine Schwingungsposition auf der optischen Faser (25), auf die die Schwingung aufgebracht wird, auf der Grundlage der gestreuten optischen Intensitätsverteilung zu spezifizieren und eine tatsächliche Position auf dem oberirdischen Kabel (26), an der Schwingung aufgebracht wird, durch Zuordnen der Schwingungsposition auf der optischen Faser (25) zu einer Position des oberirdischen Kabels (26) auf einer Karte (50) zu spezifizieren.

2. Das System zur Spezifizierung einer Einrichtungsposition nach Anspruch 1, wobei die zylindrische Abdeckung (40) einen Schwingungsmechanismus (43) zum Aufbringen der Schwingung umfasst.

3. Ein Verfahren zur Spezifizierung einer Einrichtungsposition zum Spezifizieren einer Position eines oberirdischen Kabels (26), das Verfahren umfasst:
Abdecken des oberirdischen Kabels (26) mit einer zylindrischen Abdeckung (40) an einer beliebigen Position auf dem oberirdischen Kabel (26) in einer Längsrichtung, wobei die zylindrische Abdeckung (40) Lamellen (42) an einer Innenwand davon hat, die Lamellen (42) sind in Kontakt mit dem oberirdischen Kabel (26) und übertragen die Schwingung auf das oberirdische Kabel;
Verbinden eines optischen Messgeräts (20) mit einem Endabschnitt einer optischen Faser (25), die in dem oberirdischen Kabel (26) enthalten ist;
Aufbringen von Schwingung auf das oberirdische Kabel (26) von der zylindrischen Abdeckung (40);
Erfassen einer zeitlichen Änderung von gestreutem Licht aus der optischen Faser (25) als zeitliche Änderung einer gestreuten optischen Intensitätsverteilung der optischen Faser (25) in einer Längsrichtung, wenn die Schwingung aufgebracht wird;
Spezifizieren einer Schwingungsposition auf der optischen Faser (25), auf die die Schwingung aufgebracht wird, auf der Grundlage der gestreuten optischen Intensitätsverteilung; und
Zuordnen der Schwingungsposition auf der optischen Faser (25) zu einer Position des oberirdischen Kabels (26) auf einer Karte (50) und Spezifizieren einer tatsächlichen Position auf dem oberirdischen Kabel (26), an der Schwingung aufgebracht wird.

## Revendications

1. Système de spécification de position d'installation pour spécifier une position d'un câble aérien (26), le système comprenant :
une fibre optique (25) le long du câble aérien (26) ;
une enveloppe cylindrique (40) enveloppant le câble aérien (26) au niveau d'une position arbitraire sur le câble aérien (26) dans une direction longitudinale, dans lequel l'enveloppe cylindrique (40) a des lamelles (42) sur une paroi interne de celle-ci, les lamelles (42) étant en contact avec le câble aérien (26) et transmettant la vibration au câble aérien ;
un instrument de mesure optique (20) connecté à une extrémité de la fibre optique (25) et configuré pour acquérir un changement temporel dans une lumière diffusée à partir de la fibre optique (25) lorsqu'une vibration est appliquée au câble aérien (26) à partir de l'enveloppe cylindrique (40) en tant que changement temporel dans une distribution d'intensité optique diffusée de la fibre optique (25) dans une direction longitudinale ; et
une unité de traitement de signal (21) configurée pour spécifier une position de vibration sur la fibre optique (25) à laquelle la vibration est appliquée sur la base de la distribution d'intensité optique diffusée, et spécifier une position réelle du câble aérien (26) auquel la vibration est appliquée en associant la position de vibration sur la fibre optique (25) à une position du câble aérien (26) sur une carte (50).

2. Système de spécification de position d'installation selon la revendication 1, dans lequel l'enveloppe cylindrique (40) comprend un mécanisme de vibration (43) pour appliquer la vibration.

3. Procédé de spécification de position d'installation pour spécifier une position d'un câble aérien (26), le procédé comprenant :
l'enveloppement du câble aérien (26) avec une enveloppe cylindrique (40) au niveau d'une position quelconque sur le câble aérien (26) dans une direction longitudinale, dans lequel l'enveloppe cylindrique (40) a des lamelles (42) sur une paroi interne de celle-ci, les lamelles (42) étant en contact avec le câble aérien (26) et transmettant la vibration au câble aérien ;
la connexion d'un instrument de mesure optique (20) à une partie d'extrémité d'une fibre optique (25) incluse dans le câble aérien (26) ;
l'application d'une vibration au câble aérien (26) à partir de l'enveloppe cylindrique (40) ;
l'acquisition d'un changement temporel de lumière diffusée à partir de la fibre optique (25) lorsque la vibration est appliquée en tant que changement temporel dans une distribution d'intensité optique diffusée de la fibre optique (25) dans une direction longitudinale ;
la spécification d'une position de vibration sur la fibre optique (25) à laquelle la vibration est appliquée sur la base de la distribution d'intensité optique diffusée ; et
l'association de la position de vibration sur la fibre optique (25) à une position du câble aérien (26) sur une carte (50) et la spécification d'une position réelle du câble aérien (26) auquel la vibration est appliquée.
